# EUROPÄISCHE PATENTSCHRIFT

(11) **EP 0 531 761 B1**
(45) Veröffentlichungstag und Bekanntmachung des Hinweises auf die Patenterteilung: **14.02.1996**
(21) Anmeldenummer: 92114121.4
(22) Anmeldetag: 19.08.1992
(51) Int. Cl.: B60R 13/08, G10K 11/16

(54) **Absorber**
Absorber
Absorbeur

(30) Priorität: 26.08.1991 DE 9110552 U
(43) Veröffentlichungstag der Anmeldung: 17.03.1993
(73) Patentinhaber: Illbruck Production S.A., CH-2892 Courgenay (CH)
(72) Erfinder: Illbruck, Michael, W-5090 Leverkusen 3 (DE); Kallenberg, Albert, W-5030 Hürth 5 (DE); Arnold, Günter, W-5653 Leichlingen 1 (DE); Etterer, Uwe, W-5653 Leichlingen 1 (DE)
(74) Vertreter: Müller, Enno, Dipl.-Ing.

(56) Entgegenhaltungen:
- EP-A- 0 213 322
- EP-A- 0 266 726
- EP-A- 0 316 744
- GB-A- 2 167 020
- US-A- 4 013 302

## Beschreibung

Die Erfindung betrifft einen Absorber nach den Merkmalen des Oberbegriffes des Anspruches 1.

Ein derartiger Absorber ist bspw. aus der EP-A 131 616 bekannt. Dort besteht das Schaumstoffteil aus durgängigem Schaumstoff. Der Schaumstoff ist durchgängig mit der gleichen Dicke und lochfrei ausgebildet. Zur Stabilität des Schaumstoffes ist eine eingesiegelte Gitterlage vorgesehen. Für Elemente zur Luftschall-Absorption ist ist es auch bekannt, eine Folie auf eine höckerartige Ausgestaltung eines Dämmstoffes, bspw. eines Schaumstoffes aufzulegen, so daß die Folie im wesentlichen frei schwingend angeordnet ist. Hierzu wird bspw. auf die FR-A 23 68 111 und die DE-C1 32 19 339 hingewiesen. Ferner ist es auch aus Kurtze, Physik und Technik der Lärmbekämpfung, Verlag G. Braun, Karlsruhe, 1964, Seite 15, bekannt, bei Folienresonatoren, die unmittelbar in eine Wandfläche angebracht werden, eine Folie vorzusehen, die randseitig durch poröses Dämpfungsmaterial abgestützt ist.

Auf dem Hintergrund dieses Standes der Technik soll ein neuer Absorber bereitgestellt werden. Dieser Absorber ist im Anspruch 1 angegeben. Es handelt sich im einzelnen um ein Motorraumkapselelement.

Die beidseitige Folienabdeckung des gelochten Schaumstoffteiles läßt sich einfach durchführen. Es ist des weiteren eine hohe Wirksamkeit des so geschaffenen Absorbers gegeben. Darüber hinaus läßt sich ein so geschaffenes Absorberteil einfach mit dem schallharten Wandteil verbinden. Auch ist die dem Absorberteil eigene Steifigkeit ausreichend, um dieses teilweise mit Abstand von dem Wandteil verlaufend anzuordnen, wodurch sich gleichfalls eine günstige Unterstützung der Schallabsorbierung bzw. Schalldämmung ergibt. Da die Folie bevorzugt sehr dünn ist, beispielsweise 25 bis 60 my,liegt sowohl eine Absorptionswirkung wie auch eine Schalldämmung durch Reflexion vor. Der Schaumstoff kann geschlossenporig oder, vorzugsweise, offenporig sein. Der geschlossenporige oder offenporige Schaumstoff soll weiter biegeweich sein. Die Lochung besteht bevorzugt aus gleichmäßig verteilten Löchern. Weiter ist es möglich, daß die Folie in einem Lochbereich eine gewisse Einziehung aufweist, die annähernd muldenartig ist. Hierbei ist es vorteilhaft, wenn die Folie an sich aber nicht unter Spannung steht. Das muldenartige Einziehen ist abhängig von den Eigenschaften (Flexibilität) der verwendeteten Folie und auch gegebenenfalls des angewendeten Fertigungsverfahrens. Derzeit bevorzugt ist jedoch eine Ausführungsform, bei welcher die Folie ohne eine merkliche Einziehung die Löcher überspannt. Die Löcher sind vorteilhafterweise kreisförmig gestaltet, können aber auch oval oder quadratisch gestaltet sein, oder sonst eine sinnvolle Form aufweisen. In einer Querschnittsdarstellung des doppelt verhauteten Schaumstoffteils weisen die Löcher und Stege eine etwa gleiche Länge auf. Die Zwischenstege haben eine unterschiedliche Erstreckung, wenn das Lochbild von der bevorzugten Variante abweicht. Der Lochdurchmesser kann beispielsweise 1 bis 4,5 cm betragen, vorzugsweise 2,5 cm. Der Lochabstand (von Mittelpunkt zu Mittelpunkt) liegt etwa bei 45mm. Besonders bevorzugt ist auch, in Bereichen, in welchen das doppelt verhautete Schaumstoffteil nicht mit dem Wandteil verbunden ist, das Wandteil so auszubilden, daß durch unterschiedliche Wandabstände zu dem Schaumstoffteil eine Absorption in sehr unterschiedlichen Frequenzbereichen gegeben ist. Das zwischen dem doppelt verhauteten Schaumstoffteil und dem Wandteil eingeschlossene Luftvolumen wirkt als Feder, dagegen das Schaumstoffteil als Masse in einem Masse-Feder-System. Beispielsweise kann dies ein stufenförmiger, auf das Schaumstoffteil zu qerichteter Verlauf des Wandteils sein.

Nachstehend ist die Erfindung des weiteren anhand der beigefügten Zeichnung, die jedoch lediglich ein Ausführungsbeispiel darstellt, erläutert. Hierbei zeigt:
- Fig. 1: eine Draufsicht auf das Motorraumkapselelement, auf die der Schallquelle zugewandte Seite;
- Fig. 2: einen Querschnitt durch das Motorraumkapselelement nach Figur 1, etwa entlang der Linie II-II;
- Fig. 3: eine Darstellung gemäß Figur 2, bei abgeändertem Wandteil;
- Fig. 4: eine Draufsicht auf das verhautete Schaumstoffteil, im Ausschnitt;
- Fig. 5: einen Querschnitt durch den Gegenstand gemäß Figur 4 entlang der Linie V-V;

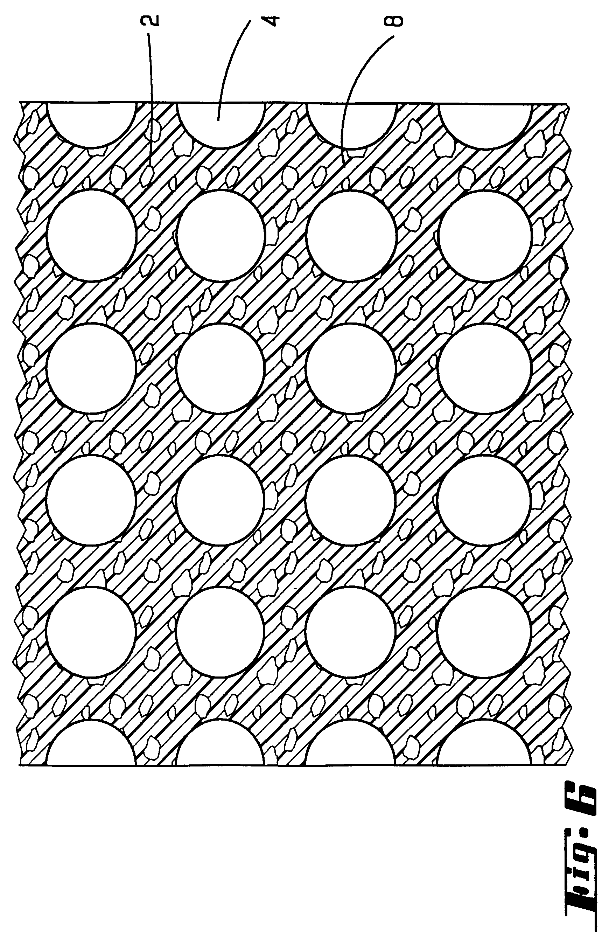

- Fig. 6: einen Querschnitt durch den Gegenstand gemäß Figur 5 entlang der Linie VI-VI.

Dargestellt und beschrieben ist ein Motorraumkapselelement 1, das aus einem beidseitig verhauteten Schaumstoffteil 2 aus offenporigem Schaumstoff besteht. Es kann sich aber auch um geschlossenporigen, biegeweichen Schaumstoff handeln. Das Schaumstoffteil 2 ist mit einem Wandteil 3 verbunden, das beim Ausführungsbeispiel schallhart ausgebildet ist. Das Schaumstoffteil 2 weist weiter Löcher 4 auf. Das Schaumstoffteil 2 ist im übrigen ganzflächig auch die Lochbereiche der Löcher 4 überdeckend, durch eine obere und untere Folie 5 bzw. 6 abgedeckt. Die Folie kann sehr dünn ausgebildet sein, beispielsweise eine Dicke von 25 bis 60 µ aufweisen. Insbesondere eignet sich hier beispielsweise eine modifizierte Polyester oder PUR-Folie. Auch Verbundfolien aus den genannten Folien. In der Zeichnung ist die Dicke der Folie, nur zur besseren Darstellung, übertrieben dick ausgebildet.

Der Schaumstoff ist bevorzugt Melaminharzschaumstoff.

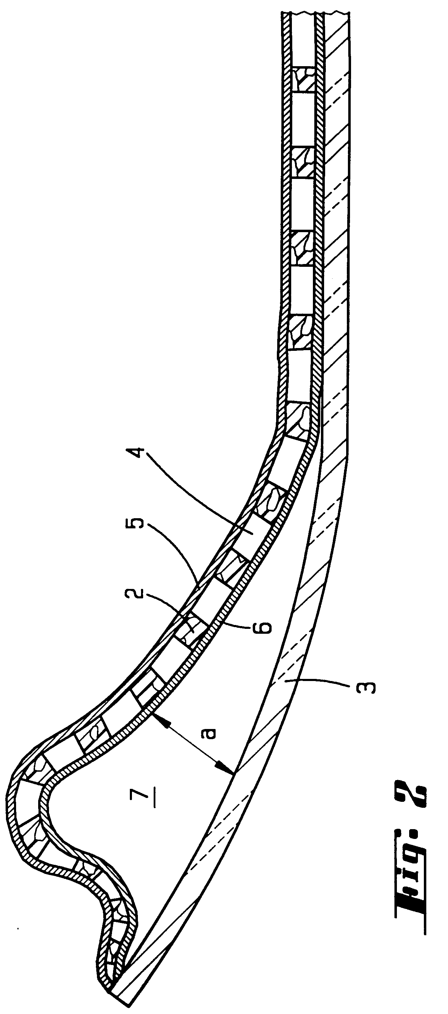

Das beidseitig verhautete Schaumstoffteil 2 ist teilweise, in Figur 2 beispielsweise in dem Bereich 7, mit einem Abstand a zu dem Wandteil 3 verlaufend angeordnet.

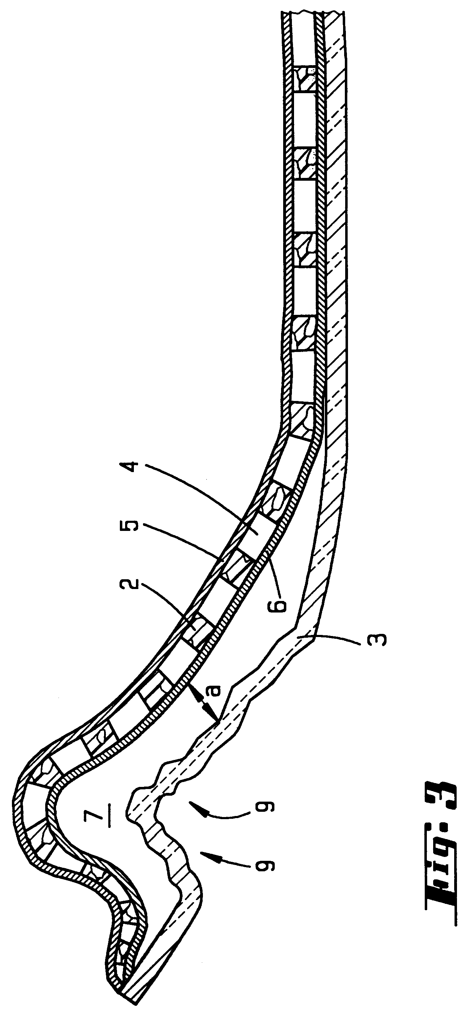

Bevorzugt ist, daß die Folie, wie in den Figuren 2 und 3 dargestellt (hier jedoch zeichnerisch die Dicke stark übertrieben) in gerader Erstreckung die Löcher 4 überspannt.

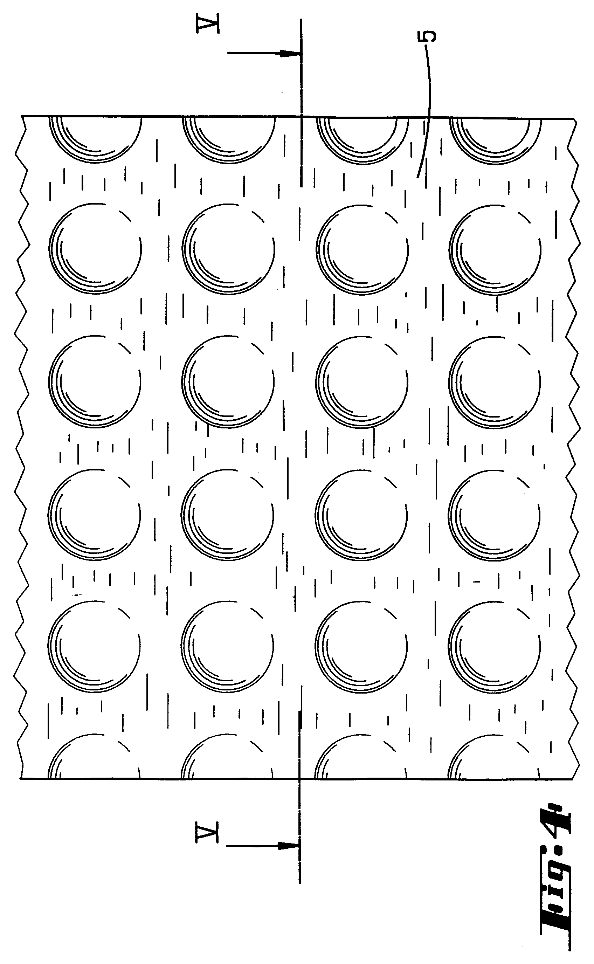

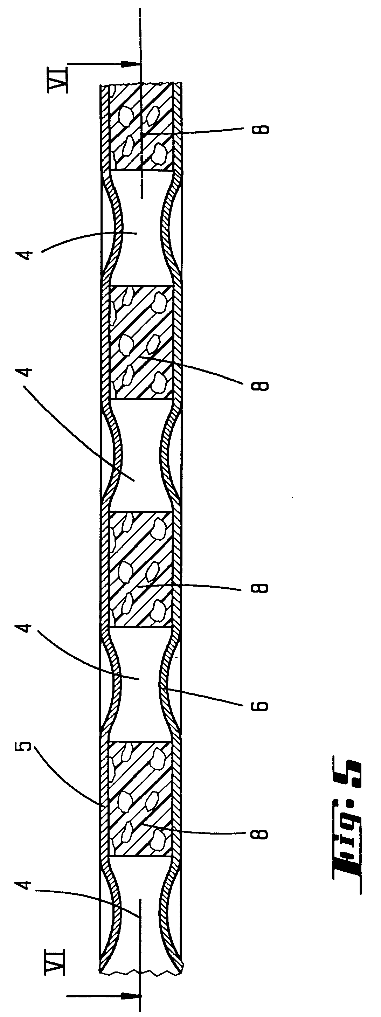

Wie sich jedoch beispielsweise aus den Figuren 4 und 5 ergibt, kann die Folie 5 bzw. 6 im Bereich der Löcher 4 auch leicht nach innen (Wölbung hier wieder zur besseren Darstellung stark übertrieben) aufeinander zu eingezogen verlaufen. Dies erbringt an jedem Lochbereich eine leicht muldenartige Vertiefung der Folie. Im Bereich eines Schaumstoffsteges 8 verläuft die Folie aber in jedem Falle im wesentlichen ebenflächig.

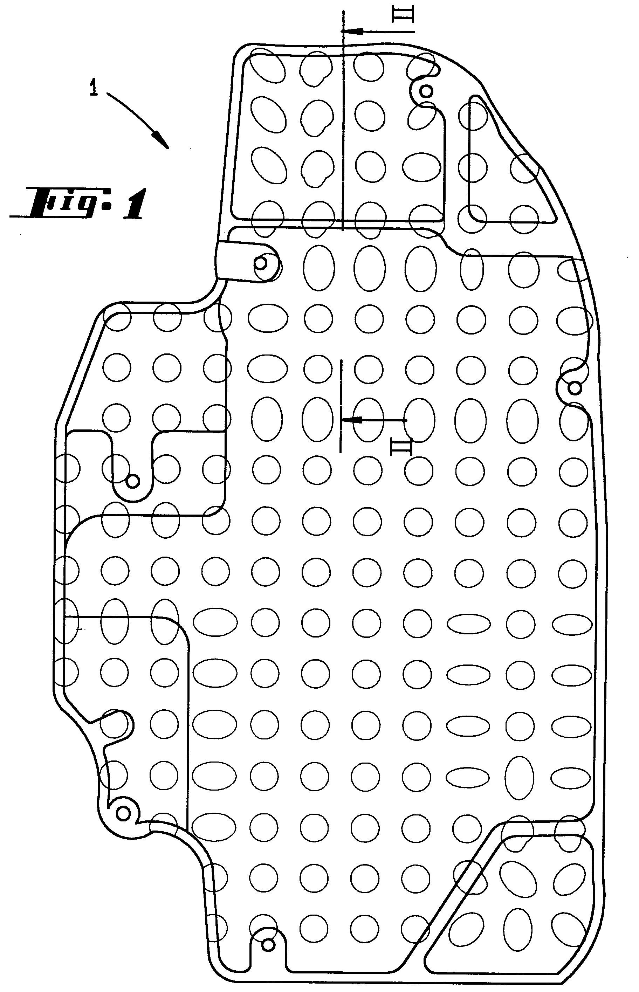

Die in Figur 1 ersichtlichen, teilweise nicht kreisförmigen Bereiche ergeben sich durch die Verformung des Schaumstoffteils und die hierauf auch zurückgehende perspektivische Änderung.

Wie sich insbesondere auch aus der Darstellung gemäß Figur 3 ergibt, können an dem Wandteil 3 im Bereich eines Abstandes a zu dem Schaumstoffteil 2 stufenartige Gestaltungen 9 des Wandteiles 3 vorgesehen sein, welche sich beim Ausführungsbeispiel nach innen zu, dem Schaumstoff 2 zugerichtet, vorwölben. So ist bei dem Motorraumkapselelement eine Absorption in einem breiten Frequenzbereich erreicht.

Die Löcher 4 sind im übrigen beim Ausführungsbeispiel kreisförmig ausgebildet. Wie sich insbesondere auch aus der Darstellung nach Figur 5 ergibt, sind sie gleichförmig in dem Schaumstoffteil 2 verteilt. Die Verteilung der Löcher 4 kann auch ungleichförmig sein, bei bevorzugt jedoch gleichem Lochanteil wie dargestellt. Der Lochanteil beträgt hierbei etwa 24%. Dies ist erreicht, beim Ausführungsbeispiel, durch einen Lochabstand von ca. 45mm. Der Lochabstand (von Mittelpunkt zu Mittelpunkt) ist in zwei zueinander senkrechten Richtungen bezüglich benachbarter Löcher gleich. Die Löcher besitzen einen Durchmesser von ca. 2,5 cm. Die Zwischenstege 8 besitzen eine etwa gleiche Erstreckung.

Insgesamt ergibt sich ein hochwirksamer, breitbandiger Absorber. Es ist des weiteren auch eine vorteilhafte Leichtbauweise realisiert, bedingt auch durch die gegebene Eigenstabilität des doppelseitig verhauteten Schaumstoffs. Insbesondere ist ein solches Motorraumkapselelement 1 auch praktisch flüssigkeitsdicht, da die Folien 5, 6 bevorzugt und beim Ausführungsbeispiel wasserdicht gewählt sind.

Die schalltechnische Wirkungsweise dieses Motorraumkapselelementes 1 kann auch wie folgt beschrieben werden. Die Schalldruckwellen treffen auf die Folien, d.h. die Folie 5 und das biegeweiche, schwingungsfähige System, das mit Abstand zu dem schallharten und starren Wandteil 3 angeordnet ist, kann schwingen. Durch die erzwungene Schwingung wird das eingeschlossene Luftvolumen, das im Sinne einer Resonanzfeder auch wirkt, komprimiert und expandiert.

Eine Schallabsorption erfolgt hauptsächlich durch Umwandlung von Schalldruck in Bewegungsenergie und durch Auslöscheffekte zwischen den Wellenzügen, d.h. teilweise Eleminierung der Schallwellen durch Phasenverschiebung.

Durch die Lochung wird der akustische Wellenwiderstand günstig beeinflußt. Die Folien, die beidseitig nicht nur den Schaumstoff 2 sondern auch die Löcher 4 abdecken, stellen in sich einen zusätzlichen schwingungsfähigen Folienabsorber dar. Das innerhalb der Löcher 4 eingeschlossene Luftvolumen kann im Sinne einer Feder durch Komprimierung und Expandierung wirken. Darüber hinaus kann aber auch hier Energie in die offenen, porösen Lochwände des Schaumstoffes 2, und damit in den Schaumstoff 2 selbst, abgeleitet werden.

Wesentlich ist auch die Stauchhärte und das Raumgewicht des verwendeten Schaumstoffs. Die Stauchhärte liegt bevorzugt im Bereich von 3 - 13, speziell bei 8kPa. Das Raumgewicht liegt bevorzugt bei 9 - 17, speziell bei 13 Kilogramm pro Megakubik.

Die in der vorstehenden Beschreibung der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Absorber (1) zur Schallabsorption, mit einem Schaumstoffteil (2) aus Schaumstoff, zur Befestigung an einem schallharten Wandteil, wobei das Schaumstoffteil (2) einseitig eine hautartige Abdeckung (5) aufweist, dadurch gekennzeichnet, daß der Schaumstoff offenporig oder geschlossenporig ist, daß das Schaumstoffteil (2) gelocht ist und daß das Schaumstoffteil (2) weiter beidseitig unter Überdeckung auch der Lochbereiche (Löcher 4) mit einer luftundurchlässigen Folie (5, 6) abgedeckt ist.

2. Absorber nach Anspruch 1, dadurch gekennzeichnet, daß das Schaumstoffteil (2) bei Befestigung an dem schallharten Wandteil (3) zumindest teilweie im Abstand (a) zu dem Wandteil (3) verlaufend angeordnet ist.

3. Absorber nach einem der vorhergehenden Ansprüche, dadurch gekennzeichnet, daß die Lochung aus gleichmäßig verteilten Löchern (4) besteht.

4. Absorber nach einem der Ansprüche 1 bis 3, dadurch gekennzeichnet, daß die Löcher (4) kreisförmig sind.

5. Absorber nach einem der Ansprüche 2 bis 4, dadurch gekennzeichnet, daß das Wandteil (3) zu dem sich frei darüber spannenden Schaumstoffteil hin stufenartig gestaltet ist.

6. Absorber nach einem der Ansprüche 1 bis 5, dadurch gekennzeichnet, daß im Querschnitt die Löcher (4) und die Stegbereiche (8) eine etwa gleiche Länge aufweisen.

7. Absorber nach einem der Ansprüche 1 bis 6, dadurch gekennzeichnet, daß der Lochdurchmesser ca. 1 bis 3 cm beträgt.

8. Absorber nach Anspruch 7, dadurch gekennzeichnet, daß der Lochdurchmesser etwa 2,5 cm beträgt.

9. Absorber nach einem der Ansprüche 1 bis 8, dadurch gekennzeichnet, daß die Folie (5, 6) in einem Lochbereich leicht muldenartig eingezogen ist.

## Claims

1. Absorber (1) for sound absorption, with a foam portion (2) made of foam, for attachment to a reverberant wall portion, wherein the foam portion (2) on one side comprises a skin-like cover (5), characterised in that the foam has open pores or closed pores, in that the foam portion (2) is perforated and in that the foam portion (2) is further covered on both sides with an air-impermeable film (5, 6), covering the hole regions (holes 4) as well.

2. Absorber according to claim 1, characterised in that the foam portion (2) when attached to the reverberant wall portion (3) is arranged to extend at least partially at a distance (a) from the wall portion (3).

3. Absorber according to any of the preceding claims, characterised in that the perforation consists of evenly distributed holes (4).

4. Absorber according to any of claims 1 to 3, characterised in that the holes (4) are circular.

5. Absorber according to any of claims 2 to 4, characterised in that the wall portion (3) is of step-like design towards the foam portion freely spanning it.

6. Absorber according to any of claims 1 to 5, characterised in that in cross-section the holes (4) and the web regions (8) have approximately the same length.

7. Absorber according to any of claims 1 to 6, characterised in that the hole diameter is about 1 to 3 cm.

8. Absorber according to claim 7, characterised in that the hole diameter is about 2.5 cm.

9. Absorber according to any of claims 1 to 8, characterised in that the film (5, 6) is retracted in a slight trough shape in a hole region.

## Revendications

1. Element absorbant (1) pour absorber le bruit, comprenant une partie de matière expansée (2), en mousse, à fixer à une partie de paroi n'amortissant pas le bruit, la partie en matière expansée comportant, d'un côté, un recouvrement (5) en forme de peau, caractérisé en ce que la matière expansée présente une texture à pores ouverts ou à pores fermés, en ce que la partie de matière expansée (2) est perforée et est en outre recouverte des deux côtés par une feuille ou un feuil (5,6) imperméable à l'air et qui recouvre également les zones perforées (trous 4).

2. Element absorbant selon la revendication 1, caractérisé en ce que, lors de sa fixation à la partie de paroi n'amortissant pas le bruit (3), la partie de matière expansée (2) est au moins partiellement disposée à une distance (a) le long de la partie de la paroi (3).

3. Elément absorbant selon l'une des revendications précédentes, caractérisé en ce que les perforations se composent de trous (4) régulièrement répartis.

4. Elément absorbant selon l'une des revendications 1 à 3, caractérisé en ce que les trous (4) sont circulaires.

5. Elément absorbant selon l'une des revendications 2 à 4, caractérisé en ce que la partie de la paroi (3) présente un profil étagé par rapport à la partie en matière expansée qui s'étend librement au dessus d'elle.

6. Elément absorbant selon l'une des revendications 1 à 5, caractérisé en ce que, en coupe transversale, les trous (4) et les zones de barrettes (8) présentent sensiblement la même longueur.

7. Elément absorbant selon l'une des revendications 1 à 6, caractérisé en ce que le diamètre des trous est compris entre 1 et 3 cm.

8. Elément absorbant selon la revendication 7, caractérisé en ce que le diamètre des cavités est d'environ 2,5 cm.

9. Elément absorbant selon l'une des revendications 1 à 8, caractérisé en ce que la feuille (5,6) est légèrement étirée en forme de cuvette dans une zone perforée.
